# EUROPÄISCHE PATENTANMELDUNG

(11) **EP 4 431 173 A1**
(43) Veröffentlichungstag der Anmeldung: **18.09.2024**
(21) Anmeldenummer: 23162230.9
(22) Anmeldetag: 16.03.2023
(51) Int. Cl.: B01D 46/24, B01D 46/52, B01D 46/58

(54) **FILTERPATRONE MIT EINER MEHRZAHL VON FILTERELEMENTEN**

(71) Anmelder: Carl Freudenberg KG, 69469 Weinheim (DE)
(72) Erfinder: Schmitt, Thorsten, 69469 Weinheim (DE); Schumacher, Sascha, 69483 Wald-Michelbach (DE); Kluck, Stefan, Dr., 68799 Reilingen (DE)

(57) **Zusammenfassung**

Die Erfindung betrifft eine Filterpatrone (10) zum Reinigen eines Luftstroms (L) mit einem Boden (2), einem beabstandet dazu angeordneten Deckel (3) und einem dazwischen befindlichen Filtermedium (7). Erfindungsgemäß ist zwischen Boden (2) und Deckel (3) eine Mehrzahl von Filterelementen (1) angeordnet, wobei ein jeweiliges Filterelement (1) von einem rohrförmigen Filtermedium (7) gebildet wird und der Deckel (3) mit einer Mehrzahl an Öffnungen (4) versehen ist.

Durch die Erfindung wird eine Filterpatrone (10) mit einer verbesserten Filtrationsleistung geschaffen ohne dabei den erforderlichen Bauraum der Filterpatrone (10) zu ändern oder deren Effizienz zu verschlechtern.

## Beschreibung

Die Erfindung betrifft eine Filterpatrone mit einer Mehrzahl von Filterelementen sowie einen Raumluftreiniger mit einer solchen Filterpatrone. Die Filterpatrone dient zum Reinigen eines Luftstroms und weist einen Boden, einen beabstandet dazu angeordneten Deckel und ein dazwischen befindliches Filtermedium auf. Die Erfindung betrifft auch einen Raumluftreiniger mit einer Filterpatrone.

### Stand der Technik

In vielen Bereichen der Technik werden Filterpatronen eingesetzt, beispielsweise um Zuluft oder Abluft zu reinigen und um zu verhindern, dass Partikel in Gebläse, Ventilatoren, Turbomaschinen oder dergleichen gelangen. Dabei werden Filterpatronen von der zu reinigenden Luft durchströmt. Häufig werden Filterpatronen als Entstaubungsfilter eingesetzt. Eine Filterpatrone ist beispielsweise in der US 11369907 B2 beschrieben. Die Anordnung mehrerer Filterpatronen geht beispielsweise aus der US 8580004 B1 hervor. Filterpatronen werden auch in Raumluftreinigern eingesetzt, welche von Nutzern in Haushalt, Gewerbe und öffentlich zugänglichen Räumen aufgestellt werden zur Verbesserung der Raumluft.

Die Filtrationsleistung solcher Filterpatronen ist durch die wirksame Filterfläche begrenzt.

Soll die Filtrationsleistung erhöht werden, so kommen gemäß dem Stand der Technik mehrere Filterpatronen zum Einsatz, welche parallel zueinander angeordnet werden. Nachteilig ist, dass die Filterpatronen jeweils einzeln in die Filteranordnung eingesetzt werden müssen und am Ende ihres Nutzungszyklus einzeln ausgetauscht werden müssen. Der Aufwand für die Nutzer ist nicht unerheblich und geht jeweils einher mit einer Kontaktierung der verschmutzen Patronen.

### Aufgabenstellung

Aufgabe der vorliegenden Erfindung ist es eine Filterpatrone mit einer verbesserten Filtrationsleistung zu schaffen, ohne dabei den erforderlichen Bauraum der Filterpatrone zu ändern oder deren Effizienz zu verschlechtern.

### Technische Lösung

Gelöst wird diese Aufgabe durch eine Filterpatrone wie sie nachfolgend beschrieben und beansprucht ist.

Erfindungsgemäß wurde als vorteilhaft erkannt eine Filterpatrone mit einer Mehrzahl von Filterelementen zu versehen.

Die Filterpatrone dient dem Reinigen eines Luftstroms und besitzt einen geschlossenen Boden, einen mit Öffnungen versehenen Deckel und mindestens ein zwischen Deckel und Boden angeordnetes, insbesondere plissiertes Filterelement. Das Filterelement umhüllt dabei einen Innenraum der Filterpatrone. Zu reinigenden Luft kann von außerhalb der Filterpatrone durch das Filtermedium in den Innenraum strömen und wird dabei gereinigt. Erfindungsgemäß ist zwischen Boden und Deckel eine Mehrzahl (n=2,3,4,...) von Filterelementen angeordnet, wobei ein jeweiliges Filterelement von einem rohrförmigen Filtermedium gebildet wird und das Filtermedium des jeweiligen Filterelements jeweils einen Innenraum umhüllt. Der Deckel ist mit einer selben Mehrzahl (n=2,3,4,...) an Öffnungen versehen, wobei einem jeweiligen Filterelement eine Öffnung zugeordnet ist und den Ausströmbereich des jeweiligen Filterelements bildet. Durch das Vorsehen mehrerer Filterelemente in der Filterpatrone kann die wirksame Filterfläche der Filterpatrone und damit deren Filtrationsleistung erhöht werden. Gleichzeitig ist weiterhin eine schneller Austausch der Filterpatrone möglich.

In Weiterbildung der Filterpatrone weist diese mindestens drei Filterelemente auf (n=3,4,...). Drei oder mehr Filterelemente können den zur Verfügung stehenden Bauraum einer Filterpatrone in der Regel besser ausnutzen als nur 2 Filterelemente.

In einer fertigungstechnisch besonders günstigen Ausführungsform besitzen alle Filterelemente der Filterpatrone den gleichen Querschnitt. Fertigungs- und Montageprozesse können vereinfacht und es müssen nicht unterschiedliche Filterelemente zur Verfügung gestellt werden.

In einer vorteilhaften Ausgestaltung der Filterpatrone sind alle oder zumindest manche der Filterelemente als zylindrische Rohre ausgestaltet. Diese sind fertigungstechnisch besonders einfach zu realisieren, indem ein plissiertes Filtermedium an seinen beiden Endfalten verschweißt oder verklebt wird. Alternativ denkbar sind auch Rohrsegmente, also Rohre, welche in ihrer Draufsicht die Form von Kreissegmenten haben, z.B. einem Drittelkreis oder einem Halbkreis. Im Falle von Drittelkreisen können bevorzugt drei gleiche Filterelemente, im Falle von Halbkreisen bevorzugt zwei gleiche Filterelemente vorgesehen sein, da dann eine optimale Raumausnutzung vorliegt.

In einer anderen vorteilhaften Ausgestaltung der Filterpatrone sind alle oder zumindest manche der Filterelemente als konische Rohre ausgestaltet. Diese können gegebenenfalls auch mit zylindrischen Rohren kombiniert werden. Dabei können konische Rohre unterschiedlicher Orientierung miteinander kombiniert werden. Dies meint, dass der geringere Durchmesser der konischen Rohre entweder im Bereich des Bodens oder des Deckels liegen kann.

In Weiterbildung dieser Filterpatrone sind Boden und Deckel - in Draufsicht betrachtet - kreisförmig ausgestaltet. Innerhalb des zwischen Boden und Deckel der Filterpatrone aufgespannten Raumes lassen sich Filterelemente in Form zylindrischer und/oder konischer Rohre so anordnen, dass der Raum besonders gut ausgenutzt wird. Haben die Kreisscheiben von Deckel und Boden den gleichen Durchmesser, so wird durch sie ein zylindrischer Raum aufgespannt, in welchem sich die Filterelemente befinden.

Eine besonders gute Raumnutzung ergibt sich bei einer Filterpatrone deren Filterelemente symmetrisch zu einer Mittelachse durch die Filterpatrone angeordnet sind. Dazu können die Filterelemente beispielsweise in einem Kreis um die Mittelachse angeordnet sein. Auch kann in der Mitte des Kreises um die Mittelachse selbst nochmals ein zentrales Filterelement angeordnet sein. Dadurch kann die zur Verfügung stehende Filtrationsfläche weiter vergrößert werden.

In einer besonders vorteilhaften und daher bevorzugten Weiterbildung sind die Außenflächen der Filtermedien der mehreren Filterelemente beabstandet zueinander angeordnet. Beabstandet meint hierbei einen Abstand von mindestens 2 mm oder von mindestes 2 Prozent des Durchmessers bzw. Querschnitts eines Filterelements. Eine solche Anordnung hat den Vorteil, dass ein jeweiliges Filterelement von allen Seiten angeströmt werden kann, also die Außenfläche eines Filtermediums komplett angeströmt und für die Filtration genutzt werden kann. Im Falle der Ausformung der Filterelemente als zylindrische Rohre können diese an ihrem Umfang im Winkel von 360° angeströmt werden.

Die Filtermedien der Filterpatrone können plissiert sein, also mit einer ZickZack-Faltung versehen. Dadurch kann die wirksame Filtrationsfläche weiter vergrößert werden.

In besonders vorteilhafter Weiterbildung weist der Deckel der Filterpatrone mehrere Venturidüsen auf und die Venturidüsen greifen in die plissierten Filterelemente ein. Eingreifen meint dabei nicht, dass die Venturidüse in den Innenraum des Filterelements eingesetzt wird, sondern vielmehr, dass die Venturidüse und das Filterelement ineinander übergehen. Durch diese vorteilhafte Ausgestaltung wird erreicht, dass der von dem Luftstrom im Bereich seiner Ausnehmung durchströmbare Deckel jeweils größtmöglich ausgestaltet wird, konkret: dass die durchströmbare Fläche größtmöglich ausgestaltet wird. Durch diese vorteilhafte Strömungsführung des Luftstroms können die durch die vorliegenden Engstellen bedingten Druckverluste reduziert werden. Einher mit geringeren Druckverlusten geht eine Erhöhung der Energieeffizienz der Filterpatrone. In anderen Worten: Durch den höheren energetischen Wirkungsgrad der Filterpatrone kann Energie eingespart werden. Eine derartige Ausgestaltung ist in der EP 3 680 003 B1 dargestellt und näher beschrieben.

In alternativer Ausgestaltung der erfindungsgemäßen Filterpatrone sind deren Filterelemente in Form eines geraden oder schiefen Kegelstumpfes gebracht und besitzen im Schnitt senkrecht zur Längsachse der Filterpatrone eine ovale, eine im Wesentlichen runde oder eine kreisrunde Grundfläche.

In Weiterbildung der vorbeschriebenen Filterpatrone können deren Filterelemente durch ein Vergussmaterial, z.B. Polyurethan PUR, gegenüber dem Deckel und/ oder dem Boden abgedichtet und fest mit diesem verbunden sein.

Die Erfindung betrifft auch einen Raumluftreiniger mit einer Filterpatrone wie vorstehend beschrieben.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll anhand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Fig. 1a und b: eine erste Ausführungsform einer Filterpatrone in einer Ansicht und in einer Schnittdarstellung
- Fig. 2a bis c: alternative Ausführungsformen einer Filterpatrone in vereinfachten Schnittdarstellungen
- Fig. 2d: eine weitere alternative Ausführungsform einer Filterpatrone in einer Ansicht
- Fig. 3a und b: eine weitere Ausführungsform einer Filterpatrone in einer Ansicht und in einer Ansicht ohne Deckel
- Fig. 4a und b: eine weitere Ausführungsform einer Filterpatrone in einer Ansicht und in einer Ansicht ohne Deckel
- Fig. 5: eine Filterpatrone gemäß dem Stand der Technik

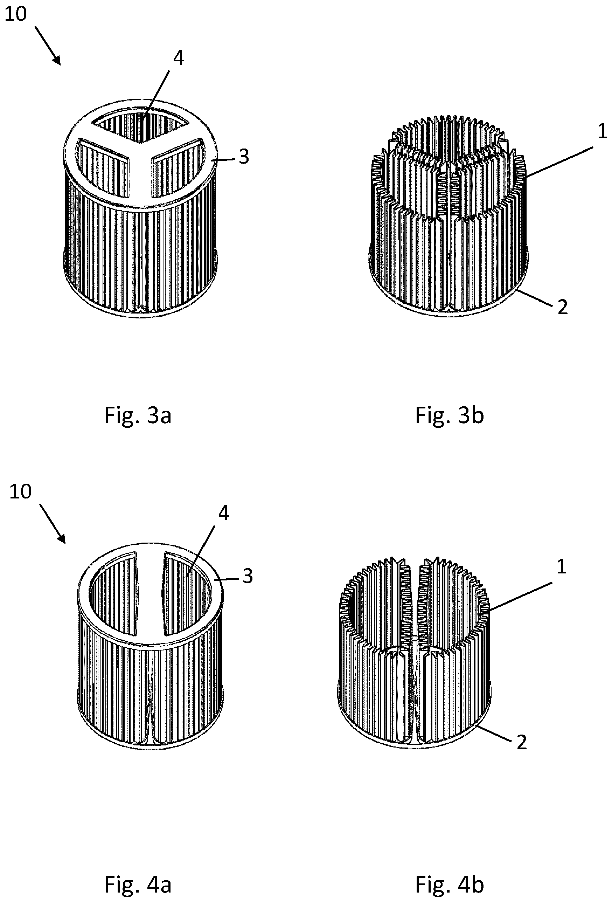

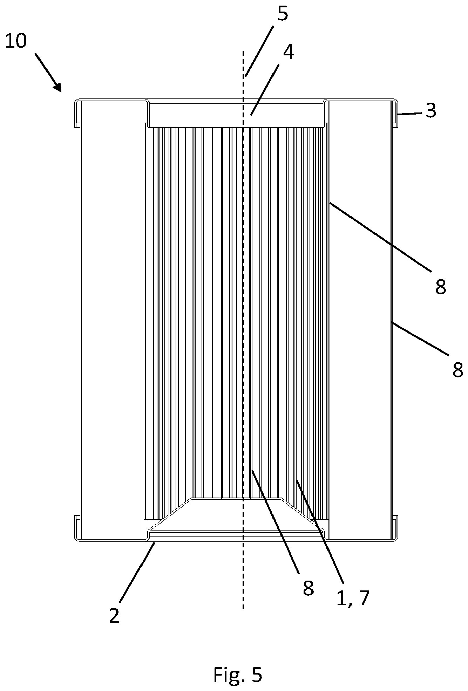

Fig. 5 zeigt eine Filterpatrone 10 gemäß dem Stand der Technik. Zwischen einem Boden 2 und einem eine mittige Ausnehmung 4 aufweisenden Deckel 3 ist ein einziges plissiertes Filterelement 1 angeordnet, welches einen Innenraum 6 (nicht dargestellt) der Filterpatrone 10 umhüllt. Im dargestellten Ausführungsbeispiel besitzt die Filterpatrone 10 eine zylindrische Form und das eine Filterelement 1 wurde ebenfalls in zylindrischer Form gebracht. Die Darstellung von Fig. 3 zeigt einen Schnitt durch die vertikale Längsachse der Filterpatrone 10, sodass sowohl die Falten 8 des Filterelements 1 zu erkennen sind als auch die Faltabschnitte, d.h. die Flächen, welche jeweils zwischen zwei Faltkanten liegen.

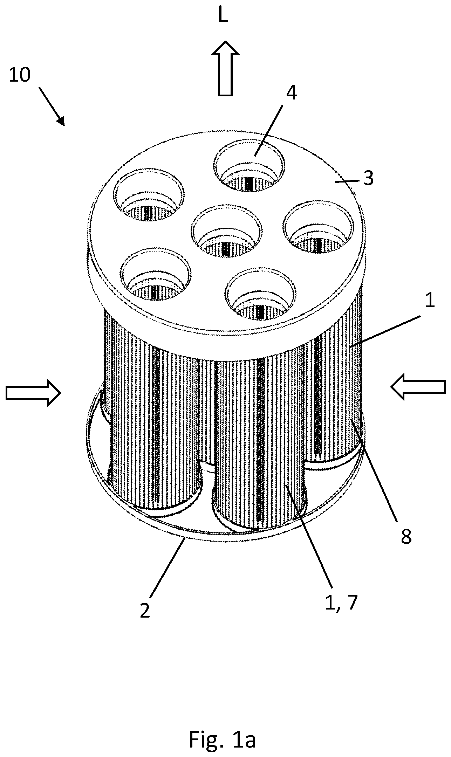

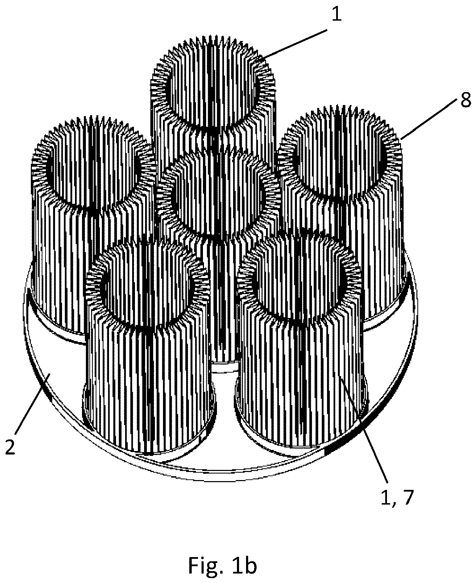

Fig. 1a und b zeigen eine erste Ausführungsform einer Filterpatrone in einer Ansicht und in einer Schnittdarstellung.

Die Filterpatrone 10 besitzt einen Boden 2 und einen Deckel 3. Beide haben in dem dargestellten Ausführungsbeispiel eine kreisrunde Form, also die Form einer Kreisscheibe. Zwischen Boden 2 und Deckel 3 sind fünf zylindrische Filterelemente 1 angeordnet. Ein jeweiliges Filterelement 1 wird durch ein plissiertes, also mit Falten 8 versehenes Filtermedium 7 gebildet. Im Zentrum ist ein erstes Filterelement 1 angeordnet. Dessen Filtermedium 7 umhüllt die Mittelachse der Filterpatrone 10. Um dieses Filterelement 1 herum befinden sich vier weitere Filterelemente 1. Diese sind symmetrisch angeordnet zur Mittelachse 5 (hier nicht dargestellt) durch die Filterpatrone 10.

In dem Deckel 3 sind Öffnungen 4 eingebracht, wobei eine jeweilige Öffnung 4 einem jeweiligen Filterelement 1 zugeordnet ist. Zu reinigende Luft L, welche durch die Filtermedien 7 hindurchtritt, dabei gereinigt wird, und in den Innenraum der Filterelemente 1 gelangt, kann durch diese Öffnungen 4 im Deckel 3 wieder ausströmen.

Zur Verdeutlichung der Anordnung mehrerer Filterelemente 1 in der Filterpatrone 10 wird diese in einem Schnitt (horizontaler Schnitt) in Fig. 1b dargestellt.

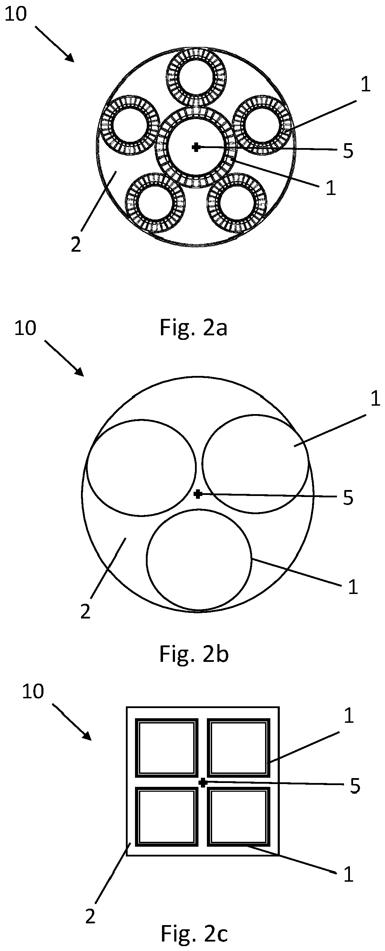

Fig. 2a bis c zeigen alternative Ausführungsformen einer Filterpatrone 10 in analogen Schnitten in vereinfachten Darstellungen.

Bei der Filterpatrone 10 gemäß Fig. 2a sind fünf Filterelemente 1 symmetrisch um ein zentrales Filterelement 1 herum angeordnet. Das zentrale Filterelement 1 hat im Vergleich zu den anderen einen größeren Durchmesser.

Bei der Filterpatrone 10 gemäß Fig. 2b sind drei Filterelemente 1 symmetrisch um eine Mittelachse 5 herum angeordnet. Die Außenflächen der Filtermedien 7 der Filterelemente 1 sind beabstandet zueinander. Ein jeweiliges Filterelement 1 kann somit von allen Seiten mit Luft L angeströmt werden.

Bei der Filterpatrone 10 gemäß Fig. 2c sind vier Filterelemente 1 mit quadratischem Querschnitt in zwei Reihen und zwei Spalten um eine Mittelachse 5 angeordnet. Sowohl Boden 2 als auch Deckel 3 (nicht dargestellt) besitzen ebenfalls eine quadratische Ausformung, sind also als quadratische Platten ausgebildet.

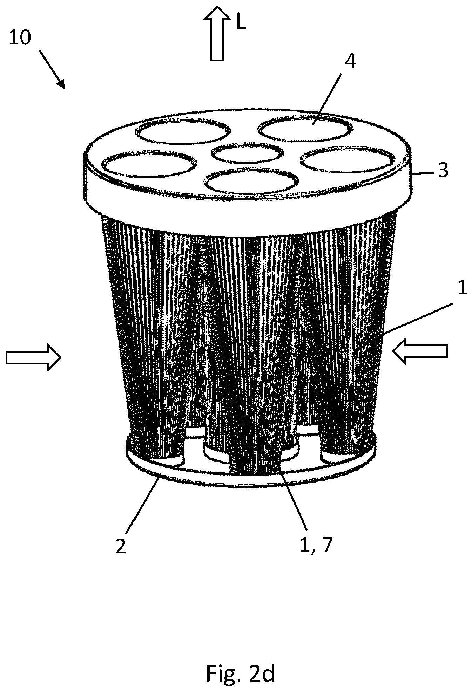

Fig. 2d zeigt eine weitere alternative Ausführungsform einer Filterpatrone 10 in einer Ansicht. Die Filterpatrone 10 besitzt einen Boden 2 und einen Deckel 3. Beide haben in dem dargestellten Ausführungsbeispiel eine kreisrunde Form, also die Form einer Kreisscheibe. Zwischen Boden 2 und Deckel 3 sind sechs konische Filterelemente 1 angeordnet. Ein jeweiliges Filterelement 1 wird durch ein plissiertes, also mit Falten versehenes Filtermedium 7 gebildet. Im Zentrum ist ein erstes Filterelement 1 angeordnet, welches seinen kleineren Durchmesser im Bereich des Deckel 3 besitzt. Dessen Filtermedium 7 umhüllt die Mittelachse der Filterpatrone 10. Um dieses Filterelement 1 herum befinden sich fünf weitere Filterelemente 1. Diese sind symmetrisch angeordnet zur Mittelachse 5 (hier nicht dargestellt) durch die Filterpatrone 10 und weisen eine umgekehrte Orientierung auf: ihr kleinerer Durchmesser liegt auf Höhe des Bodens 2.

In dem Deckel 3 sind Öffnungen 4 eingebracht, wobei eine jeweilige Öffnung 4 einem jeweiligen Filterelement 1 zugeordnet ist. Zu reinigende Luft L, welche durch die Filtermedien 7 hindurchtritt, dabei gereinigt wird, und in den Innenraum der Filterelemente 1 gelangt, kann durch diese Öffnungen 4 im Deckel 3 wieder ausströmen.

Fig. 3a und b zeigen eine weitere Ausführungsform einer Filterpatrone 10 mit drei Filterelementen 1 in einer Ansicht und in einer Ansicht ohne Deckel 3. Die Filterelemente 1 haben in Draufsicht in etwa die Form von Kreissegmenten.

Fig. 4a und b zeigen eine weitere Ausführungsform einer Filterpatrone 10 mit zwei Filterelementen 1 in einer Ansicht und in einer Ansicht ohne Deckel 3. Die Filterelemente 1 haben in Draufsicht in etwa die Form von Halbkreisen.

### Bezugszeichenliste

- 1: Filterelement
- 2: Boden
- 3: Deckel
- 4: Öffnung (Ausnehmung)
- 5: Mittelachse
- 6: Innenraum
- 7: Filtermedium
- 8: Falten Filterelement
- 9: -
- 10: Filterpatrone

- L: Luftstrom

## Patentansprüche

1. Filterpatrone (10) zum Reinigen eines Luftstroms (L) mit einem Boden (2), einem beabstandet dazu angeordneten Deckel (3) und einem dazwischen befindlichen Filtermedium (7),
**dadurch gekennzeichnet, dass**
zwischen Boden (2) und Deckel (3) eine Mehrzahl von Filterelementen (1) angeordnet ist, wobei ein jeweiliges Filterelement (1) von einem rohrförmigen Filtermedium (7) gebildet wird und der Deckel (3) mit einer Mehrzahl an Öffnungen (4) versehen ist.

2. Filterpatrone nach Anspruch 1,
**dadurch gekennzeichnet, dass**
die Filterpatrone (10) mindestens drei Filterelemente (1) aufweist.

3. Filterpatrone nach einem der vorangehenden Ansprüche,
**dadurch gekennzeichnet, dass**
alle Filterelemente (1) den gleichen Querschnitt besitzen.

4. Filterpatrone nach einem der vorangehenden Ansprüche,
**dadurch gekennzeichnet, dass**
Filterelemente (1) als zylindrische Rohre ausgestaltet sind.

5. Filterpatrone nach einem der vorangehenden Ansprüche,
**dadurch gekennzeichnet, dass**
Filterelemente (1) als konische Rohre ausgestaltet sind.

6. Filterpatrone nach Anspruch 4 oder 5,
**dadurch gekennzeichnet, dass**
Boden (2) und Deckel (3) - in der Draufsicht betrachtet - kreisförmig ausgestaltet sind.

7. Filterpatrone nach einem der vorangehenden Ansprüche,
**dadurch gekennzeichnet, dass**
die Filterelemente (1) symmetrisch zu einer Mittelachse (5) durch die Filterpatrone (10) angeordnet sind.

8. Filterpatrone nach einem der vorangehenden Ansprüche,
**dadurch gekennzeichnet, dass**
die Außenflächen der Filtermedien (7) der Filterelemente (1) beabstandet zueinander angeordnet sind.

9. Filterpatrone nach einem der vorangehenden Ansprüche,
**dadurch gekennzeichnet, dass**
die Filtermedien (7) plissiert sind.

10. Raumluftreiniger mit einer Filterpatrone (10) nach einem der vorangehenden Ansprüche.
